# EUROPÄISCHE PATENTANMELDUNG

(11) **EP 4 538 225 A1**
(43) Veröffentlichungstag der Anmeldung: **16.04.2025**
(21) Anmeldenummer: 23020467.9
(22) Anmeldetag: 12.10.2023
(51) Int. Cl.: C01B 3/02, B01D 53/047, B01D 53/14, C01B 3/50, C01C 1/04, C25B 1/04

(54) **VERFAHREN UND ANLAGE ZUR HERSTELLUNG VON AMMONIAK**

(71) Anmelder: Linde GmbH, 82049 Pullach (DE)
(72) Erfinder: Lang, Martin, 82049 Pullach (DE); Vincentelli, Martin, 82049 Pullach (DE); Reinke, Michael, 82049 Pullach (DE); Köhler, Regina, 82049 Pullach (DE)
(74) Vertreter: Fischer, Werner

(57) **Zusammenfassung**

Es wird ein Verfahren (100) zur Herstellung von blauem Ammoniak vorgeschlagen, bei dem ein erster Stoffstrom (102) unter Erhalt eines zweiten Stoffstroms (103) und eines dritten Stoffstroms (104) einer Kohlendioxidentfernung (20) unterworfen wird, der zweite Stoffstrom (103) oder ein Teil hiervon unter Erhalt eines vierten Stoffstroms (105) einer Ammoniaksynthese (30) unterworfen wird, der vierte Stoffstrom (105) oder ein Teil hiervon unter Erhalt eines fünften Stoffstroms (106) einer Ammoniakaufbereitung (40) unterworfen wird, und der dritte Stoffstrom (104) oder ein Teil hiervon unter Erhalt eines sechsten Stoffstroms (107) einer Kohlendioxidaufbereitung (50) unterworfen wird, wobei der erste Stoffstrom (102) Wasserstoff und Kohlendioxid enthält, der zweite Stoffstrom (103) gegenüber dem ersten Stoffstrom (102) an Wasserstoff angereichert und an Kohlendioxid abgereichert ist, der dritte Stoffstrom (104) und der sechste Stoffstrom (107) gegenüber dem ersten Stoffstrom (102) an Kohlendioxid angereichert und an Wasserstoff abgereichert sind, und der vierte Stoffstrom (105) und der fünfte Stoffstrom (106) Ammoniak enthalten.

Hierbei ist vorgesehen, dass die Ammoniakaufbereitung (30) und die Kohlendioxidaufbereitung (50) unter Verwendung einer gemeinsam genutzten Kälteanlage (60) durchgeführt werden. Eine entsprechende Anlage wird ebenfalls vorgeschlagen.

## Beschreibung

Die Erfindung betrifft ein Verfahren und eine Anlage zur Herstellung von Ammoniak.

### Hintergrund

Bei der herkömmlichen Produktion von Ammoniak wird zunächst Wasserstoff bzw. ein Gemisch von Wasserstoff und Stickstoff erzeugt. Zur Herstellung von Wasserstoff können kohlen(wasser)stoffhaltige Einsatzstoffe z.B. mittels Dampfreformierung, partieller Oxidation, autothermer Reformierung oder einer Kombination dieser Verfahren umgesetzt werden. Bei allen diesen Verfahren fällt Kohlendioxid an. Typischerweise wird das Kohlendioxid mittels einer chemischen oder physikalischen Wäsche oder mittels Druckwechseladsorption aus einem Produktgemisch der genannten Verfahren abgetrennt. Falls das abgetrennte Kohlendioxid nicht in einem nachfolgenden Prozess, wie beispielsweise zur Produktion von Harnstoff, benötigt wird, wird es herkömmlicherweise an die Atmosphäre abgegeben.

Neuerdings gewinnt die Gewinnung von sogenanntem blauem Ammoniak an Bedeutung. Bei dieser wird angestrebt, durch geeignete Verfahrensschritte die Freisetzung von Kohlendioxid an die Atmosphäre so weit wie möglich zu vermeiden. Nach seiner Abtrennung wird das Kohlendioxid hierbei typischerweise verdichtet, falls erforderlich aufgereinigt und anschließend verflüssigt, bevor es beispielsweise in einer unterirdischen Lagerstätte endgelagert wird. Dies wird auch als Sequestrierung bezeichnet.

Es besteht der Bedarf nach Verfahren zur Herstellung von blauem Ammoniak, die Nachteile bekannter Verfahren zumindest teilweise überwinden.

### Überblick

Es werden ein Verfahren und eine Anlage mit den Merkmalen der unabhängigen Ansprüche vorgeschlagen. Ausgestaltungen sind Gegenstand der abhängigen Ansprüche und der nachfolgenden Beschreibung.

Das vorgeschlagene Verfahren zur Herstellung von blauem Ammoniak umfasst, dass ein erster Stoffstrom unter Erhalt eines zweiten Stoffstroms und eines dritten Stoffstroms einer Kohlendioxidentfernung unterworfen wird, der zweite Stoffstrom oder ein Teil hiervon unter Erhalt eines vierten Stoffstroms einer Ammoniaksynthese unterworfen wird, der vierte Stoffstrom oder ein Teil hiervon unter Erhalt eines fünften Stoffstroms einer Ammoniakaufbereitung unterworfen wird, und der dritte Stoffstrom oder ein Teil hiervon unter Erhalt eines sechsten Stoffstroms einer Kohlendioxidaufbereitung unterworfen wird.

Der erste Stoffstrom enthält Wasserstoff und Kohlendioxid, der zweite Stoffstrom ist gegenüber dem ersten Stoffstrom an Wasserstoff angereichert und an Kohlendioxid abgereichert, der dritte Stoffstrom und der sechste Stoffstrom sind gegenüber dem ersten Stoffstrom an Kohlendioxid angereichert und an Wasserstoff abgereichert, und der vierte Stoffstrom und der fünfte Stoffstrom enthalten Ammoniak.

In dem vorgeschlagenen Verfahren ist vorgesehen, dass die Ammoniakaufbereitung und die Kohlendioxidaufbereitung unter Verwendung einer gemeinsam genutzten Kälteanlage durchgeführt werden.

In dem vorgeschlagenen Verfahren kann insbesondere vorgesehen sein, dass ein in der Kälteanlage der Ammoniakanlage genutzes Kältemittel für die Vorkühlung von Kohlendioxid, bevor dieses in einer Trocknerstation aufgereinigt wird, bereitgestellt wird. Des Weiteren kann mit Hilfe dieses Kältemittels das Kohlendioxid verflüssigt und unterkühlt werden, bevor es in die Endlagerstätte gepumpt wird. Es kommt somit zu einer Verschaltung der Verdichtung/Aufreinigung von Kohlendioxid mit der bestehenden Kälteanlage der Ammoniakanlage, wobei sich die Vorteile des vorgeschlagenen Verfahrens bereits aus der gemeinsamen Nutzung einer Kälteanlage ergeben, ungeachtet der Frage, ob diese offene oder geschlossene Kältemittelkreisläufe nutzt und welches Kältemittel verwendet wird. Mittels des vorgeschlagenen Verfahrens werden bedeutende Synergieeffekte erzielt, wobei entsprechende Details nachfolgend noch erläutert werden.

In bestimmten Ausgestaltungen des vorgeschlagenen Verfahrens umfasst die Ammoniakaufbereitung eine Kühlung, Kondensation und/oder Aufreinigung von in dem vierten Stoffstrom enthaltenem Ammoniak und die Kohlendioxidaufbereitung umfasst eine Kühlung, Trocknung, Kondensation und/oder Aufreinigung von in dem dritten Stoffstrom enthaltenem Kohlendioxid. Durch die vorgeschlagenen Maßnahmen wird eine vorteilhafte Kombination und Integration dieser oder eines beliebigen Teils entsprechender Verfahrensschritte erzielt.

In bestimmten Ausgestaltungen des vorgeschlagenen Verfahrens wird in der Kohlendioxidaufbereitung zur Entfernung von Wasser ein Kühler verwendet, dem ein adsorptiver Trockner nachgeschaltet ist, der mit einem Regeneriergaserhitzer betrieben wird. Dadurch, dass die Trocknung hierbei teilweise kondensativ, d.h. durch Abkühlung, vorgenommen werden kann, wird die gesamte Auslegung der Adsorber und des Regeneriergaserhitzers kleiner, da mehr Wasser in einem entsprechenden Vorabscheider entfernt werden kann und weniger Wasser in der Adsorberstation entfernt werden muss. Dies hat zur Folge, dass die Adsorberbetten kleiner ausgelegt werden können. Dementsprechend wird auch der Energiebedarf für die Regenerierung der Adsorberstation geringer. Eine Trocknung/Verflüssigung von Kohlendioxid in Ausgestaltungen des vorgeschlagenen Verfahrens, d.h. in der Kohlendioxidaufbereitung, ermöglicht eine weitere Flexibilität zur Erreichung überkritischer Bedingungen, sei es in Kompressoren oder mittels Pumpen.

In bestimmten Ausgestaltungen des vorgeschlagenen Verfahrens wird der Ammoniaksynthese ferner ein Stickstoffstrom oder ein Teil hiervon zugeführt, der unter Verwendung eines Stickstoffbereitstellungsschritts erzeugt wird, wobei der Stickstoffbereitstellungsschritt eine kryogene Luftzerlegung und/oder ein Membranverfahren und/oder ein adsorptives Verfahren zur Abtrennung von Stickstoff aus Luft umfasst. Bestimmte Ausgestaltungen können dabei auch eine Kälteintegration mit entsprechenden Schritten, z.B. einer Luftkühlung, umfassen.

In bestimmten Ausgestaltungen des vorgeschlagenen Verfahrens wird der zweite Stoffstrom oder ein Teil hiervon mittels einer Druckwechseladsorption und/oder Stickstoffwäsche bearbeitet.

In bestimmten Ausgestaltungen des vorgeschlagenen Verfahrens wird in der gemeinsam genutzten Kälteanlage ein Teil von in der Ammoniaksynthese gebildetem Ammoniak als Kältemittel verwendet. Der Vorteil besteht dabei insbesondere darin, dass das Kältemittel Ammoniak bereits in der benötigten Kälteanlage der Ammoniakanlage vorhanden ist und somit keine zusätzliche Kälteanlage für die Kohlendioxidaufbereitung erforderlich ist. Dies führt zu einer Einsparung von Investment. Hier vorgeschlagene Ausgestaltungen sind aber nicht auf die Verwendung bestimmter Kältemittel oder Kältemittelkreisläufe bestimmter Art beschränkt.

In bestimmten Ausgestaltungen des vorgeschlagenen Verfahrens wird der in der Kälteanlage verwendete Ammoniak mittels einer Kälteanlage eines Ammoniaktanks oder einer der Ammoniaksynthese nachgeschalteten Kälteanlage bereitgestellt. Auf diese Weise kann der Bedarf an Kältemittel flexibel gedeckt werden.

In bestimmten Ausgestaltungen des vorgeschlagenen Verfahrens umfasst die gemeinsam genutzte Kälteanlage zumindest einen offenen Kältemittelkreislauf, so dass hierfür kein zusätzliches Kältemittel benötigt wird und/oder zumindest einen geschlossenen Kältemittelkreislauf, dessen Kältemittel gezielt an die jeweiligen Kühlaufgaben angepasst werden kann.

In bestimmten Ausgestaltungen des vorgeschlagenen Verfahrens wird der erste Stoffstrom unter Verwendung eines Bereitstellungsschritts bereitgestellt, in dem ein kohlenstoffhaltiger Einsatz umgesetzt wird. In bestimmten Ausgestaltungen des vorgeschlagenen Verfahrens umfasst der Bereitstellungsschritt eine Dampfreformierung, partielle Oxidation und/oder autotherme Reforming.

In bestimmten Ausgestaltungen des vorgeschlagenen Verfahrens kann ferner Wasserstoff unter Verwendung einer Elektrolyse bereitgestellt und der Ammoniaksynthese unterworfen werden.

In bestimmten Ausgestaltungen des vorgeschlagenen Verfahrens wird die gemeinsam genutzte Kälteanlage zur Kühlung in einem oder mehreren Vor- und/oder Zwischenkühlern in der Kohlendioxidaufbereitung verwendet.

In bestimmten Ausgestaltungen des vorgeschlagenen Verfahrens wird die gemeinsam genutzte Kälteanlage insbesondere ausschließlich zur Trocknung und/oder Verflüssigung in der Kohlendioxidaufbereitung verwendet.

Die vorgeschlagene Anlage zur Herstellung von blauem Ammoniak ist dafür eingerichtet, einen ersten Stoffstrom unter Erhalt eines zweiten Stoffstroms und eines dritten Stoffstroms einer Kohlendioxidentfernung zu unterwerfen, den zweiten Stoffstrom oder einen Teil hiervon unter Erhalt eines vierten Stoffstroms einer Ammoniaksynthese zu unterwerfen, den vierten Stoffstrom oder einen Teil hiervon unter Erhalt eines fünften Stoffstroms einer Ammoniakaufbereitung zu unterwerfen, und den dritten Stoffstrom oder einen Teil hiervon unter Erhalt eines sechsten Stoffstroms einer Kohlendioxidaufbereitung zu unterwerfen, wobei der erste Stoffstrom Wasserstoff und Kohlendioxid enthält, der zweite Stoffstrom gegenüber dem ersten Stoffstrom an Wasserstoff angereichert und an Kohlendioxid abgereichert ist, der dritte Stoffstrom und der sechste Stoffstrom gegenüber dem ersten Stoffstrom an Kohlendioxid angereichert und an Wasserstoff abgereichert sind, und der vierte Stoffstrom und der fünfte Stoffstrom Ammoniak enthalten.

Es ist vorgesehen, dass die Anlage eine gemeinsam nutzbare Kälteanlage aufweist und dafür eingerichtet ist, die Ammoniakaufbereitung und die Kohlendioxidaufbereitung unter Verwendung derselben durchzuführen.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Zeichnungen

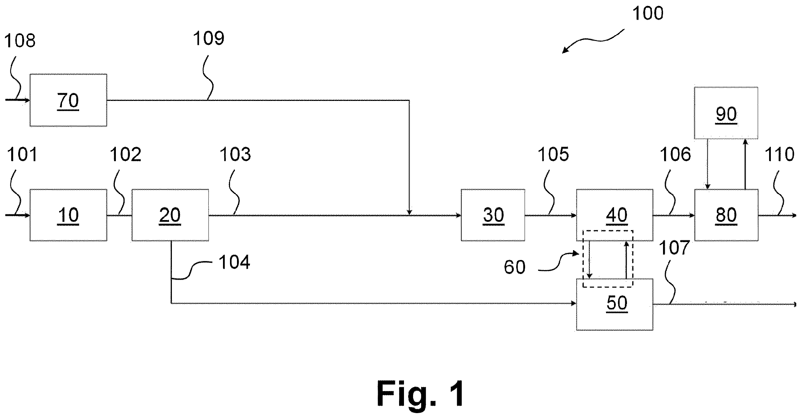

Ausführungsformen der Erfindung werden nachfolgend rein beispielhaft unter Bezugnahme auf die beigefügte Zeichnung beschrieben, wobei
Figur 1 ein Verfahren gemäß einer Ausgestaltung der Erfindung veranschaulicht.

### Ausführungsformen

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Verfahren zur Herstellung von Wasserstoff sind vielfach in der Literatur beschrieben. Statt vieler sei beispielsweise auf den Artikel von A.O. Oni et al., "Comparative assessment of blue hydrogen from steam methane reforming, autothermal reforming, and natural gas decomposition technologies for natural gas-producing regions", Energy Conversion and Management 254 (2022) 115245, verwiesen, der in den Figuren 2 bis 4 solche Verfahren zeigt und in den jeweils zugehörigen Textpassagen beschreibt.

Aus Produktgemischen entsprechender Verfahren abgetrenntes Kohlendioxid wird typischerweise verdichtet, gereinigt, d.h. insbesondere getrocknet, und anschließend entweder in gasförmigem Zustand auf Pipelinedruck verdichtet und/oder verflüssigt und flüssig auf Druck gebracht oder gepumpt und final sequestriert.

Die Ammoniakproduktion ist vielerorts, beispielsweise bei M. Appl, "Ammonia: Principles and Industrial Practice", Wiley-VCH, 1999, beschrieben. Es werden typischerweise Varianten des Haber-Bosch-Verfahrens eingesetzt. Der dabei produzierte Ammoniak wird typischerweise bei atmosphärischem Druck und einer Temperatur von -33°C gelagert. Um den Ammoniak bei diesen Bedingungen als flüssiges Produkt zu generieren, kommt typischerweise eine "offene" Kälteanlage zur Kondensation als auch zur Aufreinigung des Ammoniakes zum Einsatz, die Ammoniak als Kältemittel verwendet. Eine "offene" Kälteanlage zeichnet sich dadurch aus, dass ein Verfahrensprodukt, vorliegend Ammoniak, von einem Prozessstrom abgezweigt, als Kältemittel verwendet, und ggf. dem Prozessstrom wieder zugespeist wird.

Die nachfolgenden Erläuterungen und Definitionen, die einige Grundlagen der Erfindung betreffen, können für alle oder einen Teil der hier vorgestellten Ausgestaltungen gelten, und die Erläuterung bestimmter Aspekte im Zusammenhang mit nur einem Teil oder einer der Ausgestaltungen soll nicht dahingehend verstanden werden, dass diese Aspekte nicht auch mit anderen oder allen Ausgestaltungen, soweit technisch möglich und sinnvoll, verwirklicht sein können.

Flüssige und gasförmige Stoffströme, Gasgemische oder dergleichen können im hier verwendeten Sprachgebrauch "reich" oder "arm" an einer oder mehreren Komponenten sein, wobei "reich" für einen Gehalt von wenigstens 50%, 75%, 90%, 95%, 99%, 99,5%, 99,9% oder 99,99% und "arm" für einen Gehalt von höchstens 50%, 25%, 10%, 5%, 1%, 0,1% oder 0,01% auf molarer, Gewichts- oder Volumenbasis stehen kann.

Flüssige und gasförmige Stoffströme, Gasgemische oder dergleichen können im hier verwendeten Sprachgebrauch ferner angereichert oder abgereichert an einer oder mehreren Komponenten sein, wobei sich diese Begriffe auf einen Gehalt in einem anderen Stoffstrom beziehen, unter Verwendung dessen der Stoffstrom gebildet wurde. Ein betrachteter Stoffstrom ist dabei "angereichert", wenn er zumindest den 2-fachen, 5-fachen, 10-fachen, 100-fachen oder 1.000-fachen Gehalt der bezeichneten Komponente(n) aufweist, und "abgereichert", wenn er höchstens den 0,5-fachen, 0,1-fachen, 0,01-fachen oder 0,001-fachen Gehalt der bezeichneten Komponente(n) aufweist, jeweils in Bezug auf den Stoffstrom, unter Verwendung dessen der betrachtete Stoffstrom gebildet wurde.

Unter Angaben wie "im Wesentlichen enthaltend" und dergleichen soll hier insbesondere verstanden werden, dass in einer damit beschriebenen Zusammensetzung, einem Stoffstrom usw. neben den als obligatorisch angegebenen bzw. sich aus der Bezeichnung des Gasgemischs (bspw. "Wasserstoff) ergebenden obligatorischen Bestandteilen weitere Komponenten enthalten sein können, sofern sich die wesentlichen Merkmale der damit bezeichneten Zusammensetzung durch diese nicht signifikant ändern. Entsprechendes gilt auch Angaben wie "im Wesentlichen frei von" und dergleichen. Ein "im Wesentlichen" eine oder mehrere Komponenten enthaltendes oder aus diesen bestehendes Gas bzw. Gasgemisch kann insbesondere diese Komponenten zu mehr als 95, 99, 99,9 oder 99,99% in Summe oder als Einzelwerte aufweisen. Umgekehrt ist ein Gas bzw. Gasgemisch "im Wesentlichen frei" von einer oder mehreren Komponenten, wenn es weniger als 5, 1, 0,1 oder 0,01% dieser Komponenten in Summe oder als Einzelwerte enthält.

Sämtliche hier verwendeten Prozentangaben können sich auf Mol-, Mengen- oder Volumenanteile beziehen. Druckangaben in bar sind, soweit nicht anders erläutert, insbesondere als Absolutdrücke zu verstehen.

Die Konjunktion "und/oder" soll, wenn in einer Aufzählung vor dem letzten Begriff der Aufzählung verwendet, so verstanden werden, dass alle in der Aufzählung zuvor genannten Begriffe in beliebiger Weise miteinander kombiniert werden können. Mit anderen Worten ist mit "A, B und/oder C" "A und/oder B und/oder C" oder "wenigstens eines der Elemente A, B und C in beliebiger Kombination" gemeint.

Ist vorliegend von einem "Teil" eines Stoffstroms die Rede, kann es sich hierbei um einen Mengenanteil mit gleicher Zusammensetzung handeln, der von einem Ausgangsstrom lediglich abgezweigt wurde, aber auch um einen Anteil abweichender Zusammensetzung und ggf. nur eine Komponente des Ausgangsstroms, der mittels eines Verfahrens wie Kondensation, Evaporation, Sieden, Destillieren, Rektifizieren, Absorbieren, Adsorbieren, Flashen, Membrantrennen, Abscheiden oder dergleichen gebildet wird oder bei einem entsprechenden Schritt als Rest verbleibt. Ein "Teil" kann auch nach einer Kombination beliebiger der vorstehend benannten Schritte vorliegen, beispielsweise nach trenntechnischer Bearbeitung abgezweigten Anteils.

In Figur 1 ist ein Verfahren gemäß einer Ausgestaltung der vorliegenden Erfindung veranschaulicht und insgesamt mit 100 bezeichnet.

Teil des Verfahrens 100 ist ein Bereitstellungsschritt 10, dem ein Einsatz 101, beispielsweise Erdgas, zugeführt wird. Es kann sich bei dem Bereitstellungsschritt 10 um Dampfreformierung, partielle Oxidation, autotherme Reformierung oder eine Kombination hiervon handeln. Mittels des Bereitstellungsschritts 10 wird ein als "erster Stoffstrom" 102 bezeichnetes Komponentengemisch erhalten, das insbesondere Kohlendioxid und Wasserstoff enthält, aber auch weitere Komponenten wie Kohlenmonoxid oder erwünschte oder unerwünschte Nebenprodukte oder nicht umgesetzte Edukte umfassen kann.

Der erste Stoffstrom 102 wird einer Kohlendioxidentfernung 20 unterworfen, in der ein als "zweiter Stoffstrom" 103 bezeichnetes wasserstoffreiches Gas erhalten wird, das gegenüber dem ersten Stoffstrom 102 an Wasserstoff angereichert und an Kohlendioxid abgereichert ist, sowie ein als "dritter Stoffstrom" 104 bezeichnetes kohlendioxidreiches Gas, das gegenüber dem ersten Stoffstrom 102 an Kohlendioxid angereichert und an Wasserstoff abgereichert ist.

Der zweite Stoffstrom 103 wird im dargestellten Beispiel nach Zuspeisung eines Stickstoffstroms 109, dessen Gewinnung unten erläutert wird, unter Erhalt eines Ammoniak enthaltenden, als "vierter Stoffstrom" 105 bezeichneten Gases einer Ammoniaksynthese 30 unterworfen. Der vierte Stoffstrom 105 wird unter Erhalt von Ammoniak, das als "fünfter Stoffstrom" 106 bezeichnet wird, einer Ammoniakaufbereitung 40 unterworfen, während der dritte Stoffstrom 104 einer Kohlendioxidaufbereitung 50 unterzogen wird, bei der Kohlendioxid als "sechster Stoffstrom" 107 entsteht. Die Aufbereitungen können jeweils eine Reinigung, Trocknung, Abkühlung, Verdichtung, Verflüssigung, Druckbeaufschlagung im flüssigen Zustand, Rückverdampfung und jeden anderen sinnvollen Verfahrensschritt umfassen.

Zur Klarstellung sei nochmals angemerkt, dass der erste Stoffstrom 102 Wasserstoff und Kohlendioxid enthält, der zweite Stoffstrom 103 gegenüber dem ersten Stoffstrom 102 an Kohlendioxid abgereichert und an Wasserstoff angereichert ist, der dritte Stoffstrom 104 und der sechste Stoffstrom 107 gegenüber dem ersten Stoffstrom 102 an Kohlendioxid angereichert und an Wasserstoff abgereichert ist, und der vierte Stoffstrom 105 und der fünfte Stoffstrom 106 Ammoniak enthalten. Der fünfte Stoffstrom 106 und der sechste Stoffstrom 107 können unabhängig voneinander in gasförmigem oder flüssigem Zustand vorliegen. Der zweite Stoffstrom 103 kann insbesondere im oben verstandenen Sinne reich an Wasserstoff sein, der dritte Stoffstrom 104 und der sechste Stoffstrom 107 insbesondere reich an Kohlendioxid.

Die Ammoniakaufbereitung 40 und die Kohlendioxidaufbereitung 50 werden in dem dargestellten Beispiel unter Verwendung einer gemeinsam genutzten Kälteanlage 60 durchgeführt, die hier mit einem verflüssigten Kältemittelstrom (links) und einem verdampften Kältemittelstrom (rechts) veranschaulicht ist. Diese Kältemittelströme umfassen jeweils einen Teil von in der Ammoniaksynthese 30 gebildetem Ammoniak als Kältemittel, das nach seiner Verwendung einem Produkt zugespeist oder stromauf seiner Entnahme in das Verfahren 100 zurückgeführt werden kann. Es handelt sich um einen offenen Kältemittelkreislauf.

Weiter ist in Figur 1 ein Stickstoffbereitstellungsschritt 70 veranschaulicht, bei dem es sich beispielsweise um einen kryogenen Luftzerlegungsschritt handelt, welchem Einsatzluft 108 zugeführt und ein Stickstoffstrom 109 sowie ggf. weitere, nicht gesondert veranschaulichte Luftprodukte entnommen werden können. Ferner ist ein Ammoniakspeicherschritt 80 dargestellt. In dem Ammoniakspeicherschritt 80 verdampfendes Boiloffgas kann in einem Kondensationsschritt 90 rückverflüssigt werden. In dem Ammoniakspeicherschritt 80 gespeicherter Ammoniak kann in Form eines Stoffstroms 110 als Produkt des Verfahrens entnommen werden.

## Patentansprüche

1. Verfahren (100) zur Herstellung von blauem Ammoniak, bei dem ein erster Stoffstrom (102) unter Erhalt eines zweiten Stoffstroms (103) und eines dritten Stoffstroms (104) einer Kohlendioxidentfernung (20) unterworfen wird, der zweite Stoffstrom (103) oder ein Teil hiervon unter Erhalt eines vierten Stoffstroms (105) einer Ammoniaksynthese (30) unterworfen wird, der vierte Stoffstrom (105) oder ein Teil hiervon unter Erhalt eines fünften Stoffstroms (106) einer Ammoniakaufbereitung (40) unterworfen wird, und der dritte Stoffstrom (104) oder ein Teil hiervon unter Erhalt eines sechsten Stoffstroms (107) einer Kohlendioxidaufbereitung (50) unterworfen wird, wobei der erste Stoffstrom (102) Wasserstoff und Kohlendioxid enthält, der zweite Stoffstrom (103) gegenüber dem ersten Stoffstrom (102) an Wasserstoff angereichert und an Kohlendioxid abgereichert ist, der dritte Stoffstrom (104) und der sechste Stoffstrom (107) gegenüber dem ersten Stoffstrom (102) an Kohlendioxid angereichert und an Wasserstoff abgereichert sind, und der vierte Stoffstrom (105) und der fünfte Stoffstrom (106) Ammoniak enthalten, **dadurch gekennzeichnet, dass** die Ammoniakaufbereitung (40) und die Kohlendioxidaufbereitung (50) unter Verwendung einer gemeinsam genutzen Kälteanlage (60) durchgeführt werden.

2. Verfahren (100) nach Anspruch 1, bei dem die Ammoniakaufbereitung (40) eine Kühlung, Kondensation und/oder Aufreinigung von in dem vierten Stoffstrom (105) enthaltenem Ammoniak umfasst und die Kohlendioxidaufbereitung (50) eine Kühlung, Trocknung, Kondensation und/oder Aufreinigung von in dem dritten Stoffstrom (104) enthaltenem Kohlendioxid umfasst.

3. Verfahren (100) nach Anspruch 1 oder 2, bei dem in der Kohlendioxidaufbereitung ein Kühler verwendet wird, dem ein adsorptiver Trockner nachgeschaltet ist, der mit einem Regeneriergaserhitzer betrieben wird.

4. Verfahren (100) nach einem der vorstehenden Ansprüche, bei dem der Ammoniaksynthese (30) ferner ein Stickstoffstrom (109) oder ein Teil hiervon zugeführt wird, der unter Verwendung eines Stickstoffbereitstellungsschritts (70) erzeugt wird, wobei der Stickstoffbereitstellungsschritt (70) eine kryogene Luftzerlegung und/oder ein Membranverfahren und/oder ein adsorptives Verfahren zur Abtrennung von Stickstoff aus Luft umfasst.

5. Verfahren (100) nach einem der vorstehenden Ansprüche, bei dem der zweite Stoffstrom (103) oder ein Teil hiervon mittels einer Druckwechseladsorption und/oder Stickstoffwäsche bearbeitet wird.

6. Verfahren (100) nach einem der vorstehenden Ansprüche, bei dem in der gemeinsam genutzten Kälteanlage (60) ein Teil von in der Ammoniaksynthese (30) gebildetem Ammoniak als Kältemittel verwendet wird.

7. Verfahren (100) nach Anspruch 6, bei dem der in der Kälteanlage (60) verwendete Ammoniak mittels einer Kälteanlage eines Ammoniaktanks oder einer der Ammoniaksynthese (30) nachgeschalteten Kälteanlage bereitgestellt wird.

8. Verfahren (100) nach einem der vorstehenden Ansprüche, bei dem die gemeinsam genutzte Kälteanlage (60) zumindest einen offenen Kältemittelkreislauf und/oder zumindest einen geschlossenen Kältemittelkreislauf umfasst.

9. Verfahren (100) nach einem der vorstehenden Ansprüche, bei dem der erste Stoffstrom (102) unter Verwendung eines Bereitstellungsschritts (10) bereitgestellt wird, in dem ein kohlenstoffhaltiger Einsatz umgesetzt wird.

10. Verfahren (100) nach Anspruch 9, bei dem der Bereitstellungsschritt (10) eine Dampfreformierung, partielle Oxidation und/oder autotherme Reforming oder Kombinationen hiervon umfasst.

11. Verfahren (100) nach Anspruch 9 oder 10, bei dem ein Teil des Wasserstoffs unter Verwendung einer Elektrolyse bereitgestellt und der Ammoniaksynthese (30) unterworfen wird.

12. Verfahren (100) nach einem der vorstehenden Ansprüche, bei dem die gemeinsam genutzte Kälteanlage (60) zur Kühlung in einem oder mehreren Vor- und/oder Zwischenkühlern in der Kohlendioxidaufbereitung (50) verwendet wird.

13. Verfahren (100) nach einem der Ansprüche 1 bis 12, bei dem die gemeinsam genutzte Kälteanlage (60) zur Trocknung und/oder Verflüssigung in der Kohlendioxidaufbereitung (50) verwendet wird.

14. Anlage zur Herstellung von blauem Ammoniak, die dafür eingerichtet ist, einen ersten Stoffstrom (102) unter Erhalt eines zweiten Stoffstroms (103) und eines dritten Stoffstroms (104) einer Kohlendioxidentfernung (20) zu unterwerfen, den zweiten Stoffstrom (103) oder einen Teil hiervon unter Erhalt eines vierten Stoffstroms (105) einer Ammoniaksynthese (30) zu unterwerfen, den vierten Stoffstrom (105) oder einen Teil hiervon unter Erhalt eines fünften Stoffstroms (106) einer Ammoniakaufbereitung (40) zu unterwerfen, und den dritten Stoffstrom (104) oder einen Teil hiervon unter Erhalt eines sechsten Stoffstroms (107) einer Kohlendioxidaufbereitung (50) zu unterwerfen, wobei der erste Stoffstrom (102) Wasserstoff und Kohlendioxid enthält, der zweite Stoffstrom (103) gegenüber dem ersten Stoffstrom (102) an Wasserstoff angereichert und an Kohlendioxid abgereichert ist, der dritte Stoffstrom (104) und der sechste Stoffstrom (107) gegenüber dem ersten Stoffstrom (102) an Kohlendioxid angereichert und an Wasserstoff abgereichert sind, und der vierte Stoffstrom (105) und der fünfte Stoffstrom (106) Ammoniak enthalten, **dadurch gekennzeichnet, dass** die Anlage eine gemeinsam nutzbare Kälteanlage (60) aufweist und dafür eingerichtet ist, die Ammoniakaufbereitung (30) und die Kohlendioxidaufbereitung (50) unter Verwendung derselben durchzuführen.

15. Anlage nach Anspruch 14, die zur Durchführung eines Verfahrens nach einem der Ansprüche 1 bis 13 eingerichtet ist.
